# EUROPEAN PATENT APPLICATION

(11) **EP 4 851 753 A1**
(43) Date of publication of application: **09.12.2026**
(21) Application number: 25758725.3
(22) Date of filing: 20.02.2025
(51) Int. Cl.: G06F 3/01, G06F 3/00, G02B 27/01, G01P 15/18, H04N 13/332, H04N 13/243, H04N 23/95, G06N 3/09

(54) **HEAD-MOUNTED DEVICE, OPERATING METHOD THEREOF, AND NON-TRANSITORY STORAGE MEDIUM**

(30) Priority: 23.02.2024 KR 20240026614; 12.03.2024 KR 20240034775
(71) Applicant: Samsung Electronics Co., Ltd., Suwon-si, Gyeonggi-do 16677 (KR)
(72) Inventor: AHN, Sunggeun, Suwon-si, Gyeonggi-do 16677 (KR); KIM, Sooryuh, Suwon-si, Gyeonggi-do 16677 (KR); SON, Dongil, Suwon-si, Gyeonggi-do 16677 (KR); SON, Chaeyeon, Suwon-si, Gyeonggi-do 16677 (KR); LIM, Kwangyong, Suwon-si, Gyeonggi-do 16677 (KR); CHOI, Bokun, Suwon-si, Gyeonggi-do 16677 (KR)
(74) Representative: HGF
(86) International application number: PCT/KR2025/099497
(87) International publication number: WO 2025/178476

(57) **Abstract**

A head-mounted device is disclosed. The head-mounted device comprises: a first camera sensor corresponding to a first angle of view; a second camera sensor corresponding to the first angle of view; at least one third camera sensor corresponding to a second angle of view; an acceleration sensor; a memory for storing instructions; and a processor, wherein the instructions, when executed individually or collectively by the processor, cause the head-mounted device to: acquire a first image corresponding to a first time point through at least one of the first camera sensor and the second camera sensor; acquire a second image corresponding to the first time point through the at least one third camera sensor; and identify a third image corresponding to a second time point after the first time point on the basis of the first image corresponding to the first time point, the second image corresponding to the first time point, and sensing data acquired through the acceleration sensor.

## Description

### [Technical Field]

The disclosure relates to a head-mounted device for providing an image, an operating method thereof, and a non-transitory storage medium according to an embodiment.

### [Background Art]

With the development of electronic and communication technologies, an electronic device may be miniaturized and lightened to such an extent that it may be used without significant inconvenience even when worn on a user's body. For example, wearable electronic devices such as a head-mounted device (HMD), a smart watch (or band), a contact lens-type device, a ring-type device, a glove-type device, a shoe-type device, or a clothing-type device are being commercialized. Since a wearable electronic device is worn directly on a body, portability and user accessibility may be improved.

A visual see-through head-mounted display (VST-HMD) is a head mounting type electronic device having a form such as goggles. The head mounting type electronic device (or head-mounted device) is a device used while being worn on a user's head or face, and may provide the user with information about an object in an image or text form in at least a part of a space within the user's field of view.

After wearing the VST-HMD type wearable electronic device, the user is physically disconnected from the outside (closed-view), but may experience pure virtual reality (VR) rendered through an internal display. Further, such a type of electronic device transmits a live video collected through a camera mounted on the front side to the internal display in real time, and may also provide the user with an augmented reality (AR) or mixed reality (MR) experience based on a real space.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

A head-mounted device according to an embodiment of the disclosure may include a first camera sensor corresponding to a first angle of view, a second camera sensor corresponding to the first angle of view, at least one third camera sensor corresponding to a second angle of view, an acceleration sensor, memory storing instructions, and a processor.

According to an embodiment, the instructions, when executed individually or collectively by the processor, may cause the head-mounted device to obtain a first image corresponding to a first time point through at least one of the first camera sensor and the second camera sensor.

According to an embodiment, the instructions, when executed individually or collectively by the processor, may cause the head-mounted device to obtain a second image corresponding to the first time point through the at least one third camera sensor.

According to an embodiment, the instructions, when executed individually or collectively by the processor, may cause the head-mounted device to identify a third image corresponding to a second time point after the first time point, based on the first image corresponding to the first time point, the second image corresponding to the first time point, and sensing data obtained through the acceleration sensor.

An operating method of a head-mounted device according to an embodiment of the disclosure may include obtaining a first image corresponding to a first time point through at least one of a first camera sensor of the head-mounted device corresponding to a first angle of view and a second camera sensor of the head-mounted device corresponding to the first angle of view.

The operating method may include obtaining a second image corresponding to the first time point through at least one third camera sensor of the head-mounted device corresponding to a second angle of view.

The operating method may include identifying a third image corresponding to a second time point after the first time point, based on the obtained first image corresponding to the first time point, the obtained second image corresponding to the first time point, and sensing data obtained through an acceleration sensor of the head-mounted device.

In a non-transitory storage medium storing computer-readable instructions according to an embodiment of the disclosure, the instructions, when executed by a processor of a head-mounted device, may cause the head-mounted device to obtain a first image corresponding to a first time point through at least one of a first camera sensor corresponding to a first angle of view and a second camera sensor corresponding to the first angle of view.

The instructions, when executed by the processor of the head-mounted device, may cause the head-mounted device to obtain a second image corresponding to the first time point through at least one third camera sensor corresponding to a second angle of view.

The instructions, when executed by the processor of the head-mounted device, may cause the head-mounted device to identify a third image corresponding to a second time point after the first time point, based on the first image corresponding to the first time point, the second image corresponding to the first time point, and sensing data obtained through an acceleration sensor.

### [Brief Description of Drawings]

In relation to the description of the drawings, the same or similar reference numerals may be used for the same or similar components.
FIG. 1 is a block diagram illustrating an electronic device in a network environment according to an embodiment.
FIG. 2 is a block diagram illustrating components of a head-mounted device according to an embodiment.
FIG. 3 is a flowchart illustrating an operating method of a head-mounted device according to an embodiment.
FIG. 4A is a view illustrating a camera sensor and a generated image according to an embodiment.
FIG. 4B is a view illustrating a camera sensor and a generated image according to an embodiment.
FIG. 4C is a view illustrating a camera sensor and a generated image according to an embodiment.
FIG. 4D is a view illustrating a camera sensor and a generated image according to an embodiment.
FIG. 5A is a flowchart illustrating a method of identifying an image corresponding to a second time point according to an embodiment.
FIG. 5B is a view illustrating a method of identifying an image corresponding to a second time point according to an embodiment.
FIG. 6 is a flowchart illustrating a method of post-processing an identified image according to an embodiment.
FIG. 7A is a flowchart illustrating a method of displaying an image according to an embodiment.
FIG. 7B is a view illustrating a method of displaying an image according to an embodiment.
FIG. 8A is a flowchart illustrating a method of displaying an image according to an embodiment.
FIG. 8B is a view illustrating a method of displaying an image according to an embodiment.
FIG. 9 is a flowchart illustrating a method of displaying an image according to an embodiment.
FIG. 10 is a view illustrating a generative artificial intelligence system according to an embodiment.
FIGS. 11A and 11B are views illustrating a front side and a rear side of a head-mounted device according to an embodiment.

### [Mode for Carrying out the Invention]

Hereinafter, embodiments of the disclosure will be described in detail with reference to the drawings so that those skilled in the art may easily implement the disclosure. However, the disclosure may be implemented in various different forms and is not limited to the embodiments described herein. In relation to the description of the drawings, the same or similar reference numerals may be used for the same or similar components. Further, in the drawings and the related descriptions, descriptions of well-known functions and configurations may be omitted for clarity and conciseness.

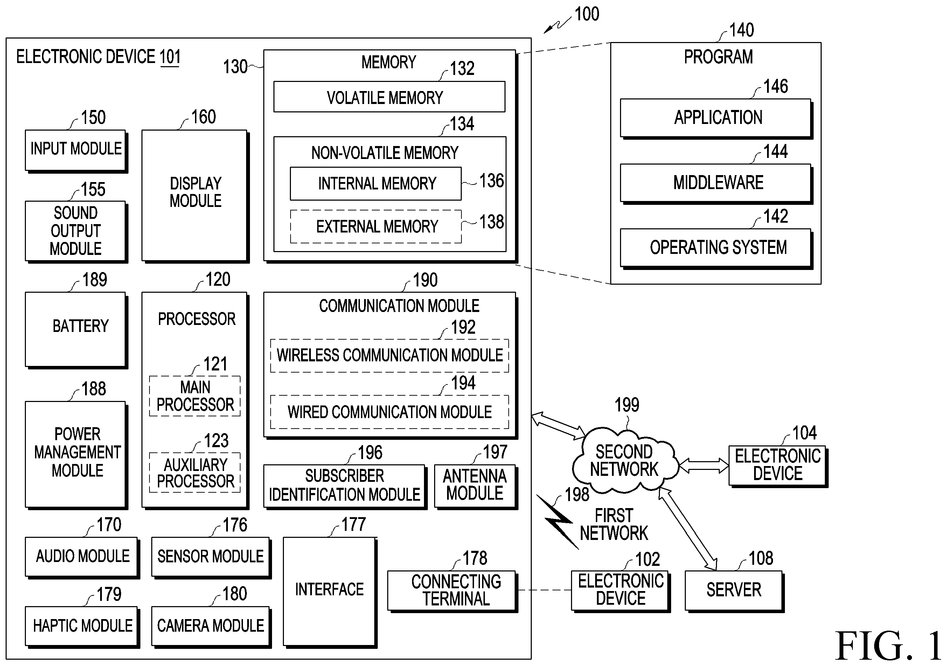

FIG. 1 is a block diagram illustrating an electronic device 101 in a network environment 100 according to an embodiment. Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to various embodiments, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

In the following detailed description, the same reference numerals in the drawings may be assigned or omitted for components that may be easily understood through the preceding embodiments, and the detailed description thereof may also be omitted. The electronic device 101 according to an embodiment disclosed in this document may be implemented by selectively combining configurations of different embodiments, and a configuration of one embodiment may be replaced by a configuration of another embodiment. For example, it is noted that the disclosure is not limited to specific drawings or embodiments.

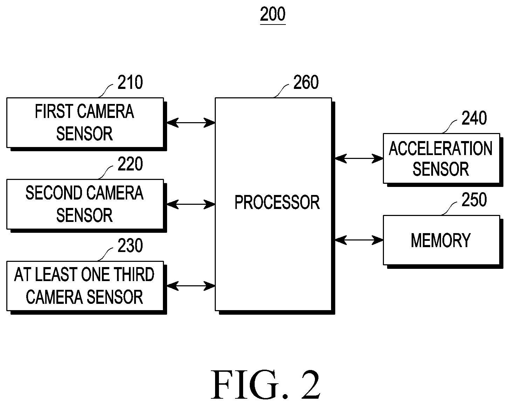

FIG. 2 is a block diagram illustrating components of a head-mounted device 200 according to an embodiment.

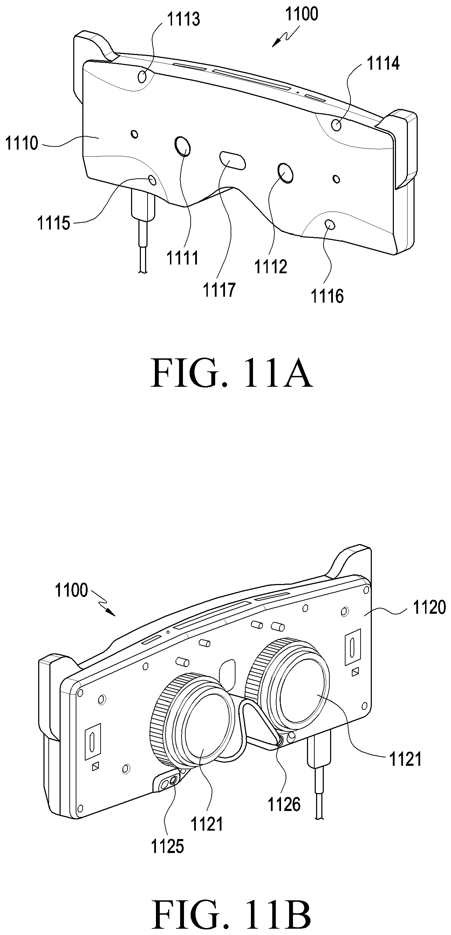

Referring to FIG. 2, in an embodiment, a head-mounted device 200 (e.g., the electronic device 101 of FIG. 1) may include a first camera sensor 210, a second camera sensor 220, at least one third camera sensor 230, an acceleration sensor 240, memory 250 (e.g., the memory 130 of FIG. 1), and a processor 260. In an embodiment, the head-mounted device 200 may be at least partially the same as or similar in configuration to the head-mounted device 1100 illustrated in FIG. 11.

In an embodiment, the first camera sensor 210 may be at least partially the same as or similar in configuration to the camera module 180 of FIG. 1. In an embodiment, the first camera sensor 210 may correspond to a pass-through camera. The pass-through camera is a camera that obtains an image of a field of view range that a user (e.g., a human) wearing the head-mounted device 200 may see without the head-mounted device 200. In an embodiment, the first camera sensor 210 may be a camera corresponding to either the left eye or the right eye of the user. For example, when the first camera sensor 210 is implemented as a camera corresponding to the left eye of the user, the first camera sensor 210 may obtain an image corresponding to the surrounding environment that the user views with the left eye. In an embodiment, the first camera sensor 210 may correspond to a first angle of view (AOV) or field of view (FOV).

In an embodiment, the second camera sensor 220 may be at least partially the same as or similar in configuration to the camera module 180 of FIG. 1. In an embodiment, the second camera sensor 220 may correspond to a pass-through camera. In an embodiment, the second camera sensor 220 may be a camera corresponding to either the left eye or the right eye of the user. For example, the first camera sensor 210 may be implemented as a camera corresponding to the left eye, and the second camera sensor 220 may be implemented as a camera corresponding to the right eye of the user. The second camera sensor 220 may obtain (or output) an image corresponding to the surrounding environment that the user views with the right eye. In an embodiment, the second camera sensor 220 may correspond to a first angle of view (or field of view or FOV). In an embodiment, the first camera sensor 210 and the second camera sensor 220 may be implemented as red, green, blue (RGB) cameras.

In an embodiment, the at least one third camera sensor 230 may be at least partially the same as or similar in configuration to the camera module 180 of FIG. 1. In an embodiment, the at least one third camera sensor 230 may correspond to a second angle of view, and the second angle of view may be different from the first angle of view. For example, the second angle of view may be equal to or greater than the first angle of view. In an embodiment, when the second angle of view is equal to or greater than the first angle of view, an image obtained through the at least one third camera sensor 230 may be an image corresponding to a relatively wide field of view range compared to an image obtained through the first camera sensor 210 or the second camera sensor 220.

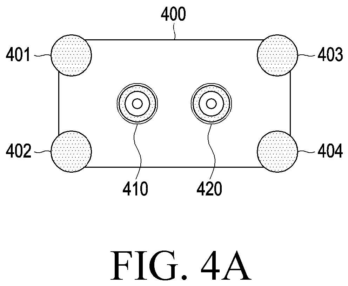

In an embodiment, the at least one third camera sensor 230 may obtain an image corresponding to a range relatively wider than the user's field of view range. In an embodiment, the at least one third camera sensor 230 may be disposed at a designated position within the head-mounted device 200. In an embodiment, the at least one third camera sensor 230 may be implemented as an RGB camera or a monochrome camera. The first camera sensor 210, the second camera sensor 220, and the at least one third camera sensor 230 will be described in detail with reference to FIGS. 4A to 4D.

In an embodiment, the acceleration sensor 240 may be at least partially the same as or similar in configuration to the sensor module 176 of FIG. 1. In an embodiment, the acceleration sensor 240 may be implemented as an inertial measurement unit (IMU) sensor, but is not limited thereto. In an embodiment, the head-mounted device 200 may obtain sensing data through the acceleration sensor 240. In an embodiment, the sensing data may be sensing information corresponding to a movement of the user wearing the head-mounted device 200. For example, when the user turns his/her head to the left, the head-mounted device 200 may obtain sensing data including sensing information corresponding to the movement of the user through the acceleration sensor 240.

In an embodiment, the memory 250 may be at least partially the same as or similar in configuration to the memory 130 of FIG. 1. For example, the memory 250 is for temporarily or permanently storing digital data, and may include at least a part of the configuration and/or functions of the memory 130 of FIG. 1.

The memory 250 according to an embodiment may store various instructions that may be performed by the processor 260. Further, the memory 250 may store at least a part of the program 140 of FIG. 1. Such instructions may include control commands such as logical operations and data input/output that may be recognized and executed by the processor 260. There will be no limitation on the type and/or amount of data that the memory 250 may store, but in the present document, the configuration and function of the memory related to the method of providing an image according to various embodiments and the operation of the processor 260 performing the method will be described. The memory 250 may store various pieces of information, and the various pieces of information stored by the memory 250 will be described in detail below.

In an embodiment, the processor 260 may be at least partially the same as or similar in configuration to the processor 120 of FIG. 1. In an embodiment, the processor 260 may include one or more processors.

In an embodiment, the processor 260 may execute instructions stored in the memory 250 to perform various operations.

In an embodiment, the processor 260 may obtain a first image corresponding to a first time point through at least one of the first camera sensor 210 and the second camera sensor 220. In an embodiment, the first time point may be a time point (or current time point) at which an image is obtained through at least one of the first camera sensor 210 and the second camera sensor 220. In an embodiment, the first image is an image provided to the user, and may be an image corresponding to the user's field of view range. For example, the first image may be an image corresponding to the surrounding environment that the user views through his/her eyes.

In an embodiment, it is assumed that the first camera sensor 210 is implemented as a camera sensor corresponding to the left eye of the user, and the second camera sensor 220 is implemented as a camera sensor corresponding to the right eye of the user. The processor 260 may obtain an image corresponding to the left eye through the first camera sensor 210, and obtain an image corresponding to the right eye through the second camera sensor 220, thereby obtaining the first image corresponding to the first time point. In this case, the first image corresponding to the first time point may include each of an image corresponding to the left eye and an image corresponding to the right eye.

In an embodiment, the processor 260 may obtain an image from either the first camera sensor 210 or the second camera sensor 220. In this case, the first image corresponding to the first time point may include only one of an image corresponding to the left eye and an image corresponding to the right eye. In an embodiment, only one of the first camera sensor 210 and the second camera sensor 220 may perform an operation of obtaining (or outputting) an image, but the disclosure is not limited thereto, and each of the first camera sensor 210 and the second camera sensor 220 may perform an image obtaining operation, and the processor 260 may obtain only one of them.

In an embodiment, the processor 260 may obtain a second image corresponding to the first time point through the at least one third camera sensor 230. In an embodiment, the second image may be an image different from the first image. In an embodiment, when the second angle of view corresponding to the at least one third camera sensor 230 is relatively larger than the first angle of view corresponding to the first camera sensor 210 and the second camera sensor 220, the second image may be an image corresponding to a relatively wider field of view range than the first image. In an embodiment, the second image may be used as a reference image for predicting an image corresponding to the user's field of view range. This will be described in detail with reference to FIGS. 4A to 4D.

In an embodiment, the processor 260 may predict an image corresponding to the user's field of view range at a time point after a designated time has elapsed from the present, using the sensing data corresponding to the movement of the user, together with the first image corresponding to the first angle of view (e.g., the user's field of view range) and the second image corresponding to the second angle of view (e.g., the reference image). In an embodiment, the processor 260 may identify a third image corresponding to a second time point after the first time point, based on the first image corresponding to the first time point, the second image corresponding to the first time point, and the sensing data obtained through the acceleration sensor.

In an embodiment, the second time point is a time point after the first time point, and may be a time point before a third time point at which an image is obtained again through the first camera sensor 210 (and/or the second camera sensor 220). In an embodiment, the third image may be an image of a future time point corresponding to the user's field of view range. For example, the third image may be a predicted image corresponding to the surrounding environment that the user views at a time point after a designated time has elapsed from the present. The third image may, in an embodiment, be an image corresponding to the first angle of view. In an embodiment, the third image is an image corresponding to the user's field of view range, and may include each of an image corresponding to the left eye and an image corresponding to the right eye.

In an embodiment, the processor 260 may identify the third image corresponding to the second time point using a trained artificial intelligence model. In an embodiment, the memory may include a first artificial intelligence model that outputs the third image corresponding to the second time point. In an embodiment, the first artificial intelligence model may be implemented as a generative artificial intelligence (AI) model. In an embodiment, the first artificial intelligence model may be a model trained to output an image of the second time point corresponding to the first angle of view, when the image of the first time point (e.g., the first image corresponding to the first angle of view and the first image corresponding to the second angle of view) and the sensing data corresponding to the movement of the user are input. In an embodiment, the processor 260 may input the first image corresponding to the first time point, the second image corresponding to the first time point, and the sensing data to the first artificial intelligence model. In an embodiment, the first artificial intelligence model may output the third image corresponding to the second time point, and the processor 260 may identify the third image corresponding to the second time point based thereon.

In an embodiment, the first artificial intelligence model may be a pre-trained model, but is not limited thereto, and may of course be trained in real time based on data input while the head-mounted device 200 operates.

In an embodiment, the sensing data may be six degrees of freedom (6DoF) acceleration information corresponding to the camera sensor included in the head-mounted device 200. In an embodiment, the processor 260 may identify the third image corresponding to the second time point using a moving average value of the sensing data during a designated time interval.

In an embodiment, the processor 260 may input information about a characteristic parameter (e.g., at least one of an angle of view of the camera, a relative position between a plurality of cameras, and an imaging direction of the camera) corresponding to each of the first camera sensor 210, the second camera sensor 220, and the at least one third camera sensor 230 to the first artificial intelligence model, thereby identifying the third image corresponding to the second time point. For example, the processor 260 may input information about the sensing data and the characteristic parameter to the first artificial intelligence model, together with the first image of the first time point and the second image of the first time point, thereby identifying the third image corresponding to the second time point.

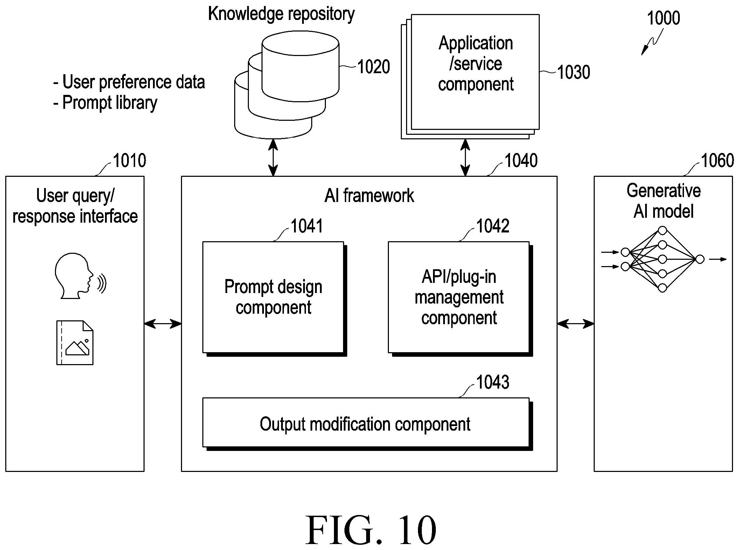

In an embodiment, the first artificial intelligence model may be at least partially the same as or similar in configuration to the generative artificial intelligence system illustrated in FIG. 10. In an embodiment, the first artificial intelligence model may be implemented as a generative adversarial network (GAN) model that generates an image based on input data.

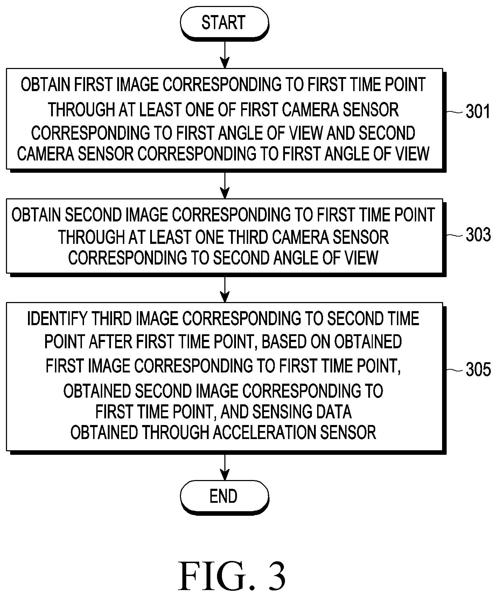

FIG. 3 is a flowchart illustrating an operating method of a head-mounted device (e.g., the head-mounted device 200 of FIG. 2) according to an embodiment.

The operating method of the head-mounted device according to various embodiments will be described in detail. According to various embodiments, operations performed by the head-mounted device described below may be executed by a processor (e.g., the processor 260 of FIG. 2) including at least one processing circuitry of the head-mounted device. According to an embodiment, the operations performed by the head-mounted device may be stored in memory (e.g., the memory 250 of FIG. 2) and may be executed by instructions that, when executed, cause the processor 260 to operate. In the following embodiments, each operation may be sequentially performed, but is not necessarily sequentially performed. For example, the order of each operation may be changed, and at least two operations may be performed in parallel. Depending on implementation, a specific operation may be omitted.

Referring to FIG. 3, according to an embodiment, in operation 301, the head-mounted device may obtain a first image (e.g., the first image of FIG. 2) corresponding to a first time point through at least one of a first camera sensor (e.g., the first camera sensor 210 of FIG. 2) corresponding to a first angle of view and a second camera sensor (e.g., the second camera sensor 220 of FIG. 2) corresponding to the first angle of view. In an embodiment, the first image is an image provided to the user, and may be an image corresponding to the user's field of view range (or the first angle of view). In an embodiment, the first image obtained through the first camera sensor and/or the second camera sensor may be an image corresponding to the surrounding environment that the user views through his/her eyes.

In an embodiment, when the first camera sensor is a camera sensor corresponding to the left eye, the head-mounted device may obtain the image corresponding to the left eye from the first camera sensor as the first image. In an embodiment, when the second camera sensor is a camera sensor corresponding to the right eye, the head-mounted device may obtain the image corresponding to the right eye from the second camera sensor as the first image. In an embodiment, the head-mounted device may obtain the images (the image corresponding to the left eye and the image corresponding to the right eye) obtained from each of the first camera sensor and the second camera sensor as the first image.

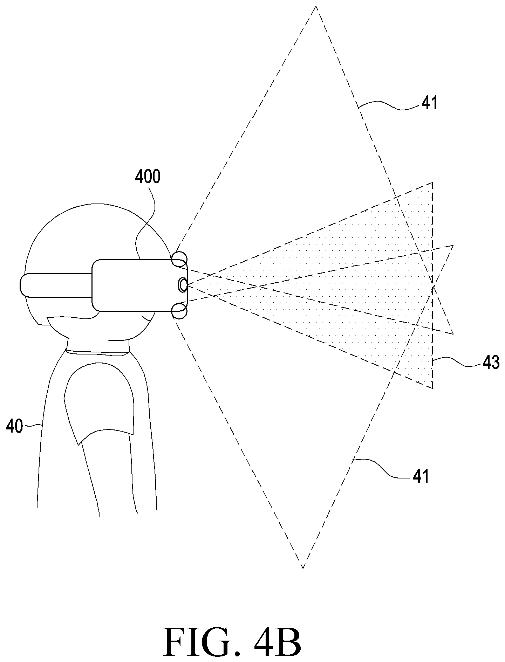

According to an embodiment, in operation 303, the head-mounted device may obtain a second image (e.g., the second image of FIG. 2) corresponding to the first time point through at least one third camera sensor (e.g., the at least one third camera sensor 230 of FIG. 2) corresponding to a second angle of view. In an embodiment, the second image may be an image corresponding to an angle of view different from that of the first image. For example, when the second angle of view is relatively larger than the first angle of view, the second image may be an image corresponding to a relatively wider field of view range than the first image. In an embodiment, when a plurality of third camera sensors are implemented, there may be a plurality of second images corresponding to the first time point. This will be described in detail with reference to FIGS. 4A and 4B.

In an embodiment, in operation 305, the head-mounted device may identify a third image corresponding to a second time point after the first time point, based on the obtained first image corresponding to the first time point, the obtained second image corresponding to the first time point, and sensing data (e.g., the sensing data of FIG. 2) obtained through an acceleration sensor (e.g., the acceleration sensor 240 of FIG. 2).

In an embodiment, the head-mounted device may include the acceleration sensor, and may obtain the sensing data corresponding to the movement of the user through the acceleration sensor. In an embodiment, the head-mounted device may predict the third image corresponding to the second time point after the first time point using the first image corresponding to the first time point and the second image corresponding to the first time point, together with the obtained sensing data. The third image may, in an embodiment, be an image corresponding to the first angle of view. In an embodiment, the third image is an image corresponding to the user's field of view range, and may include each of an image corresponding to the left eye and an image corresponding to the right eye.

FIGS. 4A to 4D are views illustrating a camera sensor and a generated image according to an embodiment.

Referring to FIGS. 4A to 4D, according to an embodiment, a head-mounted device 400 (e.g., the head-mounted device 200 of FIG. 2) may include a plurality of camera sensors 401, 402, 403, 404, 410, and 420.

In an embodiment, the head-mounted device 400 may include a first camera sensor 410 (e.g., the first camera sensor 210 of FIG. 2) and a second camera sensor 420 (e.g., the second camera sensor 220 of FIG. 2). In an embodiment, the first camera sensor 410 may be a camera sensor corresponding to the left eye of a user 40. In an embodiment, the first camera sensor 410 may be a camera sensor corresponding to a first angle of view (e.g., the first angle of view of FIG. 2), and may obtain an image corresponding to the left eye of the user 40. In an embodiment, the second camera sensor 420 may be a camera sensor corresponding to the right eye of the user 40. In an embodiment, the second camera sensor 420 may be a camera sensor corresponding to the first angle of view, and may obtain an image corresponding to the right eye of the user 40. In an embodiment, the first image (e.g., the first image of FIG. 2) may include at least one of the image corresponding to the left eye of the user 40 and the image corresponding to the right eye of the user 40.

In an embodiment, the head-mounted device 400 may include at least one third camera sensor 401, 402, 403, and 404. In an embodiment, the at least one third camera sensor 401, 402, 403, and 404 may be disposed at designated positions within the head-mounted device 400, but is not limited thereto, and may of course be disposed at positions different from those illustrated in FIG. 4A. In an embodiment, although four third camera sensors are illustrated in FIG. 4A as being disposed in the head-mounted device 400, the disclosure is not limited thereto, and a different number of third camera sensors may of course be disposed in the head-mounted device 400.

In an embodiment, the at least one third camera sensor 401, 402, 403, and 404 may obtain a second image (e.g., the second image of FIG. 2) corresponding to an angle of view different from that of the first image. In an embodiment, referring to FIG. 4B, the first camera sensor 410 and the second camera sensor 420, and the at least one third camera sensor 401, 402, 403, and 404 may have different angles of view. In an embodiment, a first angle of view 43 corresponding to the first camera sensor 410 and the second camera sensor 420 may be less than a second angle of view 41 (e.g., the second angle of view of FIG. 2) corresponding to the at least one third camera sensor 401, 402, 403, and 404. Accordingly, the second image obtained through the at least one third camera sensor 401, 402, 403, and 404 may be an image of a relatively wide field of view range compared to the first image obtained through the first camera sensor 410 or the second camera sensor 420.

In an embodiment, as illustrated in FIGS. 4A and 4B, the first camera sensor 410 may be disposed at a position corresponding to the left eye of the user 40, and the second camera sensor 420 may be disposed at a position corresponding to the right eye of the user 40, but the disclosure is not limited thereto, and the first camera sensor 410 may be disposed at a position corresponding to the right eye of the user 40, and the second camera sensor 420 may of course be disposed at a position corresponding to the left eye of the user 40.

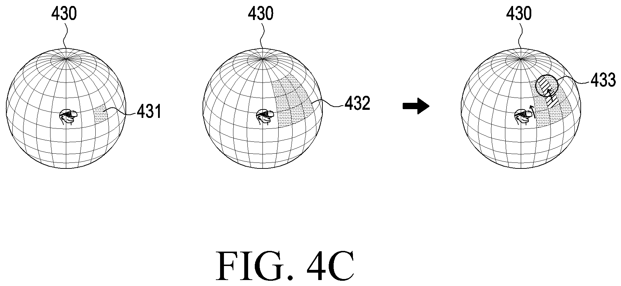

In an embodiment, the second angle of view 41 corresponding to the at least one third camera sensor 401, 402, 403, and 404 may be relatively larger than the first angle of view 43 corresponding to the first camera sensor 410 and the second camera sensor 420. In an embodiment, referring to FIG. 4C, among a field of view range 430, a field of view range 432 corresponding to the second image obtained through the at least one third camera sensor 401, 402, 403, and 404 may be relatively wider than a field of view range 431 corresponding to the first image. Here, the field of view range 432 corresponding to the second image may be a field of view range corresponding to an image obtained from each of the at least one third camera sensor 401, 402, 403, and 404.

In an embodiment, the head-mounted device 400 may generate the third image (e.g., the third image of FIG. 2) of the second time point using movement information of the user 40. For example, when sensing data (e.g., the sensing data of FIG. 2) corresponding to a movement in which the user 40 raises his/her head upward is obtained, the head-mounted device 400 may identify, based on the sensing data, an image of a field of view range 433 corresponding to the movement of the user 40 among the field of view range 432 corresponding to the second image, and identify the image as the third image of the second time point. In this case, the third image may include at least one of an image of the second time point corresponding to the left eye and an image of the second time point corresponding to the right eye.

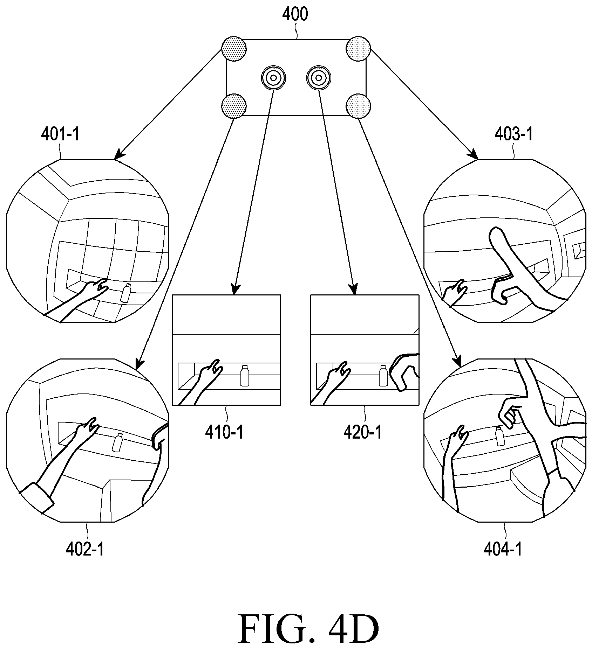

In an embodiment, as illustrated in FIG. 4D, it is assumed that each of the at least one third camera sensor 401, 402, 403, and 404 is disposed at a designated position of the head-mounted device 400. Referring to FIG. 4D, second images 401-1, 402-1, 403-1, and 404-1 obtained through the respective third camera sensors may be images corresponding to field of view ranges different from those of an image 410-1 obtained through the first camera sensor 410 and an image 420-1 obtained through the second camera sensor 420, respectively. For example, in the case of the second image 401-1 obtained through the third camera sensor 401 located at a relatively upper-left of the head-mounted device 400, it may be an image of a wide field of view range (or imaging range) with respect to a relatively left area and an upper area compared to the image 410-1 obtained from the first camera sensor 410 corresponding to the left eye. Accordingly, as illustrated in FIG. 4C, the field of view range 432 corresponding to the second images 401-1, 402-1, 403-1, and 404-1 may be relatively wider than the field of view range 431 corresponding to the first image (e.g., at least one of the image 410-1 and the image 420-1).

In an embodiment, when the at least one third camera sensor 401, 402, 403, and 404 is implemented as an RGB camera, the second image may be a color image, but the disclosure is not limited thereto, and the at least one third camera sensor 401, 402, 403, and 404 may be implemented as a monochrome camera, in which case the second image may be a monochrome image.

In an embodiment, when the third image corresponding to the second time point is identified, the head-mounted device 400 may provide the identified third image to the user 40. In an embodiment, the head-mounted device 400 may further include a display (e.g., the display module 160 of FIG. 1). In an embodiment, the head-mounted device 400 may display the identified third image corresponding to the second time point through the display. For example, after the first image corresponding to the first time point is displayed through the display, when the third image corresponding to the second time point is identified, the head-mounted device 400 may display the third image through the display after the display of the first image ends.

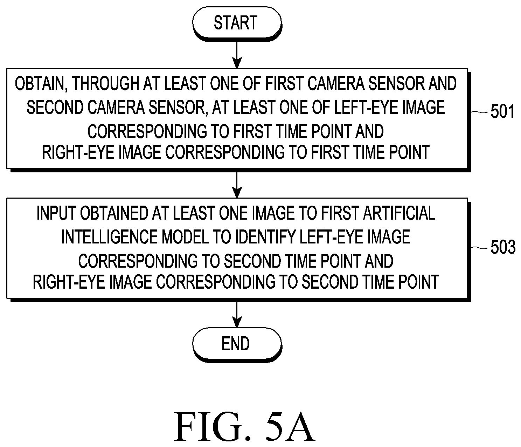

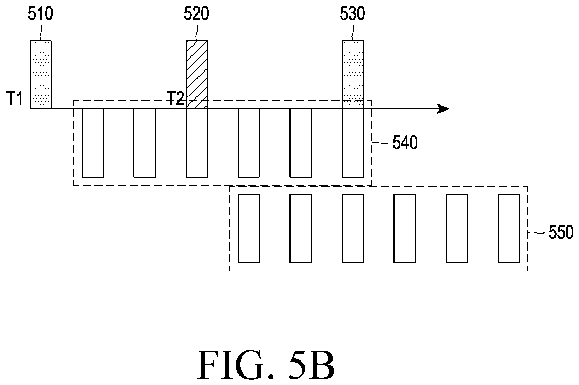

FIG. 5A is a flowchart illustrating a method of identifying an image corresponding to a second time point (e.g., the second time point of FIG. 2) according to an embodiment. FIG. 5B is a view illustrating a method of identifying an image corresponding to a second time point (e.g., the second time point of FIG. 2) according to an embodiment.

In the following embodiments, each operation may be sequentially performed, but is not necessarily sequentially performed. For example, the order of each operation may be changed, and at least two operations may be performed in parallel. Depending on implementation, a specific operation may be omitted.

Referring to FIGS. 5A and 5B, in an embodiment, in operation 501, the head-mounted device (e.g., the head-mounted device 200 of FIG. 2) may obtain at least one of a left-eye image corresponding to a first time point (e.g., the first time point of FIG. 2) and a right-eye image corresponding to the first time point through at least one of the first camera sensor (e.g., the first camera sensor 210 of FIG. 2) and the second camera sensor (e.g., the second camera sensor 220 of FIG. 2). In an embodiment, the first image may include at least one of a left-eye image corresponding to the first camera sensor and a right-eye image corresponding to the second camera sensor.

In an embodiment, the left-eye image corresponding to the first time point may be an image corresponding to the left eye of the user (e.g., the user 40 of FIG. 4). In an embodiment, when the first camera sensor is implemented as a camera sensor corresponding to the left eye, the head-mounted device may obtain the image corresponding to the left eye of the user (or the left-eye image) through the first camera sensor. In an embodiment, when the second camera sensor is implemented as a camera sensor corresponding to the right eye, the head-mounted device may obtain the image corresponding to the right eye of the user (or the right-eye image) through the second camera sensor. However, the disclosure is not limited thereto, and the first camera sensor may correspond to the right eye of the user, and the second camera sensor may of course correspond to the left eye of the user.

In an embodiment, the head-mounted device may obtain an image from either the first camera sensor or the second camera sensor, but the disclosure is not limited thereto, and in an embodiment, the head-mounted device may of course obtain an image from each of the first camera sensor and the second camera sensor.

In an embodiment, in operation 503, the head-mounted device may input the obtained at least one image to a first artificial intelligence model (e.g., the first artificial intelligence model of FIG. 2), and identify a left-eye image corresponding to a second time point (e.g., the second time point of FIG. 2) and a right-eye image corresponding to the second time point. That is, even when the head-mounted device does not input each of the left-eye image corresponding to the first time point and the right-eye image corresponding to the first time point to the first artificial intelligence model, the head-mounted device may identify the left-eye image corresponding to the second time point and the right-eye image corresponding to the second time point.

In an embodiment, when either one 510 (or the first image) of the left-eye image and the right-eye image corresponding to the first time point is obtained, the head-mounted device may input the obtained first image 510 to the first artificial intelligence model, thereby identifying a third image 540 corresponding to the second time point. In an embodiment, the third image 540 may include each of a left-eye image corresponding to the second time point and a right-eye image corresponding to the second time point, and the third image 540 may be an image of a plurality of frames. In an embodiment, the head-mounted device may display the identified third image 540 after the first image 510 corresponding to the first time point is provided.

In an embodiment, the head-mounted device may alternately obtain the left-eye image corresponding to the first camera sensor and the right-eye image corresponding to the second camera sensor. For example, when the left-eye image is obtained as the first image 510 corresponding to the first time point, the head-mounted device may obtain the right-eye image as a fourth image 520 corresponding to a third time point through the second camera sensor after a designated time has elapsed. After the fourth image 520 is obtained, after a designated time has elapsed, the head-mounted device may obtain the left-eye image as a sixth image 530 corresponding to a fifth time point through the first camera sensor.

In an embodiment, the head-mounted device may input the obtained fourth image 520 to the first artificial intelligence model, thereby identifying a fifth image 550 corresponding to a fourth time point. In an embodiment, the fifth image 550 may include each of a left-eye image corresponding to the fourth time point and a right-eye image corresponding to the fourth time point, and the fifth image 550 may be an image of a plurality of frames.

In an embodiment, when the fourth image 520 is obtained after a part of the identified third image 540 is displayed, the head-mounted device may end the display of the third image 540 and display the fourth image 520. In an embodiment, when the display of the fourth image 520 ends, the head-mounted device may display the identified fifth image 550. However, the disclosure is not limited thereto, and in an embodiment, when the display of the fourth image 520 ends, the head-mounted device may generate a new image based on the remaining part of the identified third image 540 and the identified fifth image 550. This will be described below.

In an embodiment, the head-mounted device may obtain the first image through only one of the first camera sensor and the second camera sensor. For example, the head-mounted device may obtain the first image only through the first camera sensor, and input the obtained first image to the first artificial intelligence model to obtain the third image. However, the disclosure is not limited thereto, and the head-mounted device may of course obtain the first image only through the second camera sensor, and input the obtained second image to the first artificial intelligence model to obtain the third image. In an embodiment, when the first image is obtained only through one of the first camera sensor and the second camera sensor, an image obtained through the other one may be used as a reference image.

According to the above-described example, the head-mounted device may predict the image corresponding to the user's field of view range using each of the left-eye image and the right-eye image obtained through the camera sensors, and may also predict the image corresponding to the user's field of view range using only one of the obtained left-eye image and right-eye image. Accordingly, power consumption and generation time for generating the predicted image may be reduced.

According to the above-described example, since the predicted image obtained through the artificial intelligence model is provided together with the image obtained through the camera sensor, an image of a relatively high frame per second (FPS) may be provided to the user compared to the case of providing the image obtained through the existing camera sensor. Since the head-mounted device may provide a highly responsive pass-through image, user satisfaction is improved.

According to the above-described example, since the head-mounted device may generate the predicted image using only one of the plurality of pass-through cameras (e.g., the first camera sensor and the second camera sensor), an image with relatively low latency may be provided to the user compared to the case of generating the predicted image using each of the plurality of pass-through cameras.

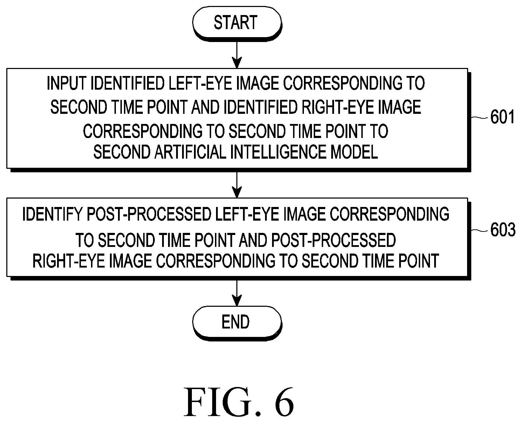

FIG. 6 is a flowchart illustrating a method of post-processing an identified image according to an embodiment.

In the following embodiments, each operation may be sequentially performed, but is not necessarily sequentially performed. For example, the order of each operation may be changed, and at least two operations may be performed in parallel. Depending on implementation, a specific operation may be omitted.

Referring to FIG. 6, in an embodiment, in operation 601, the head-mounted device (e.g., the head-mounted device 200 of FIG. 2) may input the identified left-eye image corresponding to the second time point (e.g., the left-eye image of FIG. 5) and the identified right-eye image corresponding to the second time point (e.g., the right-eye image of FIG. 5) to a second artificial intelligence model.

In an embodiment, the memory (e.g., the memory 250 of FIG. 2) may further include the second artificial intelligence model. In an embodiment, the second artificial intelligence model may be a supervised-learning artificial intelligence model. In an embodiment, the second artificial intelligence model may be a model trained to output a post-processed left-eye image corresponding to the second time point and a post-processed right-eye image corresponding to the second time point, when the identified third image (e.g., the left-eye image corresponding to the second time point and the identified right-eye image corresponding to the second time point) is input. In an embodiment, the post-processed left-eye image and the post-processed right-eye image may be images in which a view point corresponding to the image is corrected.

In an embodiment, it is assumed that the left-eye image is obtained through the first camera sensor (e.g., the first camera sensor 210 of FIG. 2), and the right-eye image is obtained through the second camera sensor (e.g., the second camera sensor 220 of FIG. 2). When the left-eye image and the right-eye image are obtained through different camera sensors, the head-mounted device may improve the accuracy of the image provided to the user by performing image correction based on the view point (or point of view (POV)) corresponding to each camera sensor.

In an embodiment, the view point may be obtained through an extrinsic parameter corresponding to each camera sensor. In an embodiment, the extrinsic parameter is information about the position of the camera sensor within a three-dimensional (3D) space and information about a direction in which the camera sensor faces, and the view point may be information obtained based on the extrinsic parameter. In an embodiment, an intrinsic parameter of the first camera sensor and the second camera sensor may be the same. The intrinsic parameter of the camera sensor may include information about how much the image panel moves, information about how much it is enlarged, and information about how much it is tilted. In an embodiment, as described above, when the intrinsic parameters of the first camera sensor and the second camera sensor are the same, the head-mounted device may perform correction on the image based on the view point related to the extrinsic parameter, thereby obtaining a highly accurate image.

In an embodiment, the head-mounted device may obtain a post-processed image by comparing the image obtained through the camera sensor and the image obtained through the first artificial intelligence model. In an embodiment, the second artificial intelligence model may be supervised-learned by comparing the image obtained through the camera sensor and the image identified through the first artificial intelligence model. In an embodiment, the third image identified through the first artificial intelligence model, together with the first image obtained through at least one of the first camera sensor and the second camera sensor, may be input to the second artificial intelligence model as training data.

For example, the left-eye image corresponding to the first time point obtained through the first camera sensor and the right-eye image corresponding to the first time point identified through the first artificial intelligence model may be input to the second artificial intelligence model as training data. In this case, the left-eye image corresponding to the first time point obtained through the first camera sensor and the right-eye image obtained through the second camera sensor (e.g., the second camera sensor 220 of FIG. 2) may be input together as a label.

In an embodiment, in operation 603, the head-mounted device may identify the post-processed left-eye image corresponding to the second time point and the post-processed right-eye image corresponding to the second time point. In an embodiment, the head-mounted device may identify the image output from the second artificial intelligence model as the post-processed left-eye image corresponding to the second time point and the post-processed right-eye image corresponding to the second time point.

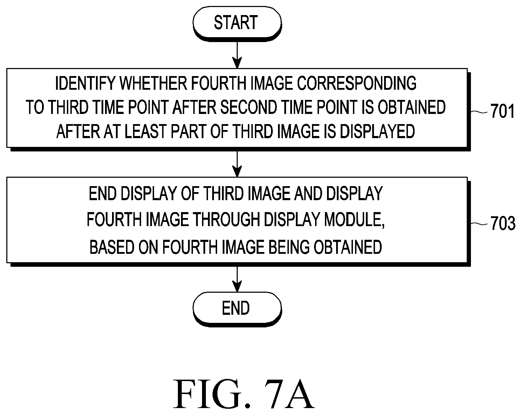

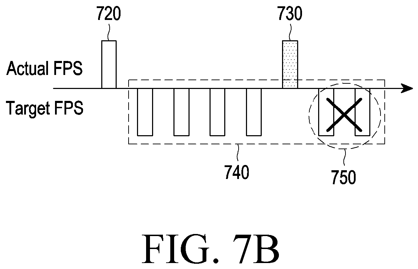

FIG. 7A is a flowchart illustrating a method of displaying an image according to an embodiment. FIG. 7B is a view illustrating a method of displaying an image according to an embodiment.

In the following embodiments, each operation may be sequentially performed, but is not necessarily sequentially performed. For example, the order of each operation may be changed, and at least two operations may be performed in parallel. Depending on implementation, a specific operation may be omitted.

Referring to FIGS. 7A and 7B, according to an embodiment, in operation 701, the head-mounted device (e.g., the head-mounted device 200 of FIG. 2) may identify whether a fourth image 730 corresponding to a third time point after the second time point (e.g., the second time point of FIG. 2) is obtained after at least a part of a third image 740 (e.g., the third image of FIG. 2) is displayed.

In an embodiment, when a first image 720 corresponding to the first time point (e.g., at least one of the left-eye image corresponding to the first time point (e.g., the left-eye image of FIG. 5A) and the right-eye image corresponding to the first time point (e.g., the right-eye image of FIG. 5A)) is obtained, the head-mounted device may identify the third image 740 corresponding to the second time point. The head-mounted device may display the identified third image 740 through the display module (e.g., the display module 160 of FIG. 1). In an embodiment, the third image 740 may include an image of a plurality of frames. In an embodiment, the head-mounted device may identify whether the fourth image 730 corresponding to the third time point is obtained after at least a part of the identified third image 740 is displayed. In an embodiment, the head-mounted device may obtain the fourth image 730 corresponding to the third time point through at least one of the first camera sensor (e.g., the first camera sensor 210 of FIG. 2) and the second camera sensor (e.g., the second camera sensor 220 of FIG. 2).

According to an embodiment, in operation 703, the head-mounted device may end the display of the third image 740 and display the fourth image 730 through the display, based on the fourth image 730 being obtained. In an embodiment, when the fourth image 730 is obtained after at least a part of the third image 740 is displayed, the head-mounted device may display the fourth image 730 through the display, and may not display the remaining part 750 of the third image 740 that has not been displayed.

In an embodiment, the third image 740 obtained through the first artificial intelligence model (e.g., the first artificial intelligence model of FIG. 2) may be temporarily stored in a designated space (e.g., a frame buffer) within the head-mounted device. When the fourth image 730 is obtained after at least a part of the third image 740 is displayed, the head-mounted device may delete the remaining part 750 stored in the designated space, and temporarily store the fourth image 730 in the designated space.

According to the above-described example, even while the image predicted through the artificial intelligence model is being provided to the user, when a new image is obtained through the camera sensor, the head-mounted device may end the provision of the predicted image and provide the image obtained through the camera sensor to the user. Accordingly, user satisfaction may be improved.

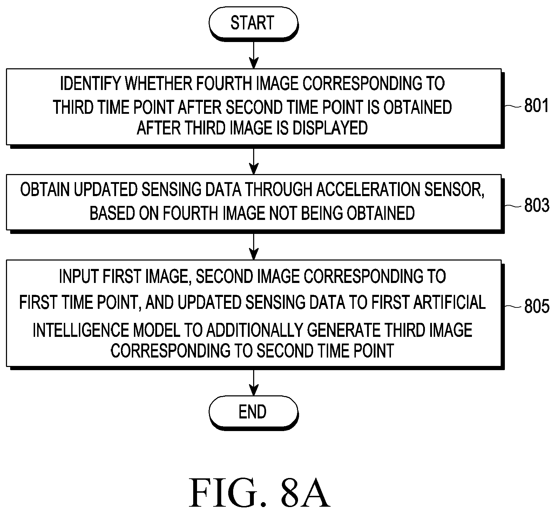

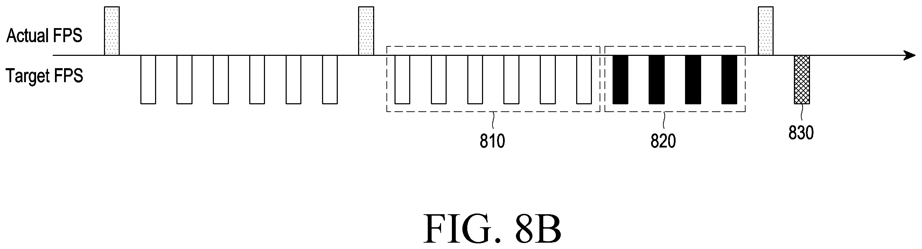

FIG. 8A is a flowchart illustrating a method of displaying an image according to an embodiment. FIG. 8B is a view illustrating a method of displaying an image according to an embodiment.

In the following embodiments, each operation may be sequentially performed, but is not necessarily sequentially performed. For example, the order of each operation may be changed, and at least two operations may be performed in parallel. Depending on implementation, a specific operation may be omitted.

Referring to FIGS. 8A and 8B, in an embodiment, in operation 801, the head-mounted device (e.g., the head-mounted device 200 of FIG. 2) may identify whether a fourth image (e.g., the fourth image 730 of FIG. 7B) corresponding to a third time point after the second time point is obtained after a third image 810 (e.g., the third image of FIG. 2) is displayed.

For example, it is assumed that the number of frames of the third image obtained through the first artificial intelligence model is six. The head-mounted device may display the third image 810 corresponding to the second time point through the display module (e.g., the display module 160 of FIG. 1). The head-mounted device may identify whether the fourth image is obtained until a time point at which the display of the third image 810 is completed. However, the disclosure is not limited thereto, and in an embodiment, the head-mounted device may identify whether the fourth image is obtained until a time point at which the display of a part of the third image 810 is completed.

In an embodiment, in operation 803, the head-mounted device may obtain updated sensing data (e.g., the sensing data of FIG. 2) through the acceleration sensor (e.g., the acceleration sensor 240 of FIG. 2), based on the fourth image not being obtained. In an embodiment, when it is identified that the fourth image is not obtained after the third image 810 is displayed, the head-mounted device may obtain the updated sensing data. For example, the head-mounted device may obtain sensing data at a time point at which it is identified that the fourth image is not obtained. However, the disclosure is not limited thereto.

In an embodiment, in operation 805, the head-mounted device may input the first image (e.g., the first image of FIG. 2), the second image corresponding to the first time point (e.g., the second image of FIG. 2), and the updated sensing data to the first artificial intelligence model (e.g., the first artificial intelligence model of FIG. 2), thereby additionally generating a third image corresponding to the second time point.

In an embodiment, the head-mounted device may input the updated sensing data to the first artificial intelligence model, together with the first image and the second image that were used to generate the third image 810, thereby identifying an additional third image 820.

In an embodiment, when the display of the existing third image 810 is completed, the head-mounted device may display the additional third image 820 through the display. In an embodiment, when it is identified that the fourth image is obtained after a part of the additional third image 820 is displayed, the head-mounted device may delete the remaining part of the additional third image 820 stored in a designated storage space (e.g., the frame buffer of FIGS. 7A and 7B), and temporarily store the fourth image 830. The head-mounted device may display the stored fourth image 830 through the display.

According to the above-described example, since 10 additional images are generated compared to the image obtained through the camera sensor, an image with an FPS 10 times larger than the existing one may be provided to the user.

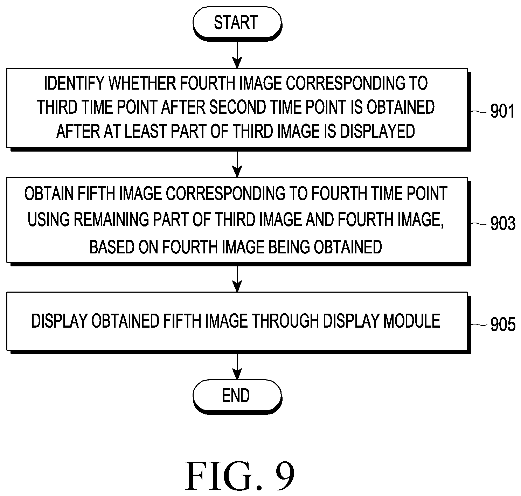

FIG. 9 is a flowchart illustrating a method of displaying an image according to an embodiment.

In the following embodiments, each operation may be sequentially performed, but is not necessarily sequentially performed. For example, the order of each operation may be changed, and at least two operations may be performed in parallel. Depending on implementation, a specific operation may be omitted.

Referring to FIG. 9, according to an embodiment, the head-mounted device (e.g., the head-mounted device 200 of FIG. 2) may, in operation 901, identify whether a fourth image (e.g., the fourth image of FIGS. 7A and 7B) corresponding to a third time point after the second time point is obtained after at least a part of the third image (e.g., the third image of FIG. 2) is displayed.

In an embodiment, when a first image corresponding to the first time point (e.g., a left-eye image corresponding to the first time point (e.g., the left-eye image of FIG. 5A) and a right-eye image corresponding to the first time point (e.g., the right-eye image of FIG. 5A)) is obtained, the head-mounted device may identify the third image corresponding to the second time point. The head-mounted device may display the identified third image through the display module (e.g., the display module 160 of FIG. 1). In an embodiment, the third image may include an image of a plurality of frames. In an embodiment, the head-mounted device may identify whether the fourth image corresponding to the third time point is obtained after at least a part of the identified third image is displayed. In an embodiment, the head-mounted device may obtain the fourth image corresponding to the third time point through at least one of the first camera sensor (e.g., the first camera sensor 210 of FIG. 2) and the second camera sensor (e.g., the second camera sensor 220 of FIG. 2).

According to an embodiment, the head-mounted device may, in operation 903, obtain a fifth image corresponding to a fourth time point using the remaining part of the third image and the fourth image, based on the fourth image being obtained. In an embodiment, the head-mounted device may blend the remaining part of the third image that has not yet been displayed and the obtained fourth image using a designated algorithm. In an embodiment, the head-mounted device may identify the blended image as the fifth image.

According to an embodiment, the head-mounted device may, in operation 905, display the obtained fifth image through the display.

According to the above-described example, the head-mounted device may obtain an image in which the predicted image obtained through the artificial intelligence model and the image obtained through the camera sensor are blended, and provide the image to the user. Accordingly, an image with improved accuracy may be provided to the user.

FIG. 10 is a view illustrating a generative artificial intelligence system 1000 according to an embodiment.

According to an embodiment, a user query/response interface 1010 may receive a user input. The user input may be in a form such as a natural language, an image, and/or a video, but there is no limitation. Further, when the user input is transmitted, context information may also be transmitted. The context information may include various pieces of additional information at the time point of the user input. For example, the additional information may include information about an application that the user is currently using or location information of the user. Further, the user input may also be in a form in which the above-described natural language, image, sound, and context information are mixed. Further, the user input may also be in a non-natural language form such as selecting a menu. The user query/response interface 1010 may output a result of the generative artificial intelligence system to the user. The output may be in a natural language form or a specific content form, and may also be provided in a form such as an action requested by the user. The user query/response interface 1010 may output the result of the generative artificial intelligence system to the user. The output may be in a natural language form or a specific content form, and may also be provided in a form such as an action requested by the user.

An AI framework 1040 may receive the user input, and coordinate and control each of the components necessary to perform the user's intention based on the user's query.

The user input received at the user query/response interface 1010 may be transmitted to a prompt design component 1041. The prompt design component 1041 may be used to generate a prompt suitable for inputting the user input to a large language model (LLM) or a large multimodal model (LMM). The prompt design component 1041 may be an AI component that uses a machine learning algorithm or a neural network to develop better prompts over time. The prompt design component 1041 may access a knowledge component including user preference data, a prompt library, and a prompt example based on the user input to generate a prompt, and transmit the generated prompt to the LLM or LMM.

An API/plug-in management component 1042 may perform a role of communicating with external information when there is a request for additional information when transmitting the user input as an input to the generative model. The API/plug-in management component 1042 may build a channel that may communicate with the outside of the AI Interface through an API, and may enable access to various data sources (e.g., a knowledge repository 1020) through the built channel. Further, when an action of ultimately performing the user's input, rather than an intermediate result, needs to be performed by an application or service, the API/plug-in management component 1042 may request the corresponding action from an application/service component 1030 through the API. The information secured from the outside may be used to generate a prompt in the prompt design component 1041 together with the user input, or may be transmitted as an input to the generative model.

An output modification component (or may also be referred to as a refiner component) 1043 may tune in detail the result output from the generative model. For example, the output modification component 1043 may verify whether the content generated through the LLM and/or LMM is irrelevant, includes biased content, or includes harmful content. Further, the output modification component 1043 may determine to what extent it matches the result desired by the user, and if an additional process is required, it may also proceed with the corresponding process. The output modification component 1043 may additionally configure a hint for avoiding an unwanted output and provide it to the user.

A generative AI model 1060 may generally refer to an artificial intelligence neural network that creates a new form of data depending on user input information. The generative AI model 1060 may include a model that generates an image and/or a model that generates a language. Representative models for generating an image include a generative adversarial network (GAN) and a variational auto encoder (VAE), and a Diffusion-based generative model using VAE and Transformer structures may be given as an example. The model for generating a language is a model trained to output the statistically most appropriate output value based on the input value, and representative examples include models such as CHAT-GPT 3 and CHAT-GPT 4. Further, there is also a large multimodal model (LMM) that may recognize various types of data input such as text, image, and voice, and generate new data corresponding thereto.

FIGS. 11A and 11B are views illustrating a front side and a rear side of a head-mounted device 1100 according to an embodiment.

Referring to FIGS. 11A and 11B, in an embodiment, on a first surface 1110 of a housing, camera modules 1111, 1112, 1113, 1114, 1115, 1116 and/or a depth sensor 1117 for obtaining information related to a surrounding environment of the head-mounted device 1100 may be disposed.

In an embodiment, the camera modules 1111, 1112 may obtain an image related to the surrounding environment of the head-mounted device.

In an embodiment, the camera modules 1113, 1114, 1115, 1116 may obtain an image while the head-mounted device 1100 is worn by the user. The camera modules 1113, 1114, 1115, 1116 may be used for hand detection, tracking, and recognition of a user's gesture (e.g., hand motion). The camera modules 1113, 1114, 1115, 1116 may be used for head tracking of 11DoF, 6DoF, position (space, environment) recognition, and/or movement recognition. In an embodiment, the camera modules 1111, 1112 may also be used for hand detection and tracking, and the user's gesture.

In an embodiment, the depth sensor 1117 may be configured to transmit a signal and receive a signal reflected from a subject, and may be used for the purpose of identifying a distance to an object, such as time of flight (TOF). In place of or in addition to the depth sensor 1117, the camera modules 1113, 1114, 1115, 1116 may identify the distance to the object.

According to an embodiment, on a second surface 1120 of the housing, face recognition camera modules 1125, 1126 and/or a display 1121 (and/or a lens) may be disposed.

In an embodiment, the face recognition camera modules 1125, 1126 adjacent to the display 1121 may be used for the purpose of recognizing the user's face, or may recognize and/or track both eyes of the user.

In an embodiment, the display 1121 (and/or the lens) may be disposed on the second surface 1120 of the head-mounted device 1100. In an embodiment, the head-mounted device 1100 may not include the camera modules 1115, 1116 among the plurality of camera modules 1113, 1114, 1115, 1116. Although not illustrated in FIGS. 11A and 11B, the head-mounted device 1100 may further include at least one of the components illustrated in FIGS. 1 and 2.

As described above, according to an embodiment, the head-mounted device 1100 may have a form factor to be worn on the user's head. The head-mounted device 1100 may further include a strap and/or a wearing member to be fixed on the user's body part. The head-mounted device 1100 may provide a user experience based on augmented reality, virtual reality, and/or mixed reality while worn on the user's head. However, the disclosure is not limited thereto, and according to an embodiment, the head-mounted device of the disclosure may include components other than those illustrated in FIGS. 11A and 11B, or may include components in which the components illustrated in FIGS. 11A and 11B are deleted and/or changed, and the head-mounted device is not limited to the illustrated contents.

A head-mounted device according to an embodiment of the disclosure may include a first camera sensor corresponding to a first angle of view, a second camera sensor corresponding to the first angle of view, at least one third camera sensor corresponding to a second angle of view, an acceleration sensor, memory storing instructions, and a processor. According to an embodiment, the instructions, when executed individually or collectively by the processor, may cause the head-mounted device to obtain a first image corresponding to a first time point through at least one of the first camera sensor and the second camera sensor.

According to an embodiment, the instructions, when executed individually or collectively by the processor, may cause the head-mounted device to obtain a second image corresponding to the first time point through the at least one third camera sensor.

According to an embodiment, the instructions, when executed individually or collectively by the processor, may cause the head-mounted device to identify a third image corresponding to a second time point after the first time point, based on the first image corresponding to the first time point, the second image corresponding to the first time point, and sensing data obtained through the acceleration sensor.

According to an embodiment, the memory may further include a first artificial intelligence model.

According to an embodiment, the instructions, when executed individually or collectively by the processor, may cause the head-mounted device to input the first image corresponding to the first time point, the second image corresponding to the first time point, and the obtained sensing data to the first artificial intelligence model, thereby identifying the third image corresponding to the second time point.

According to an embodiment, the first image may include at least one of a left-eye image corresponding to the first camera sensor and a right-eye image corresponding to the second camera sensor.

According to an embodiment, the instructions, when executed individually or collectively by the processor, may cause the head-mounted device to obtain, through at least one of the first camera sensor and the second camera sensor, at least one of a left-eye image corresponding to the first time point and a right-eye image corresponding to the first time point.

According to an embodiment, the instructions, when executed individually or collectively by the processor, may cause the head-mounted device to input the obtained at least one image to the first artificial intelligence model, thereby identifying a left-eye image corresponding to the second time point and a right-eye image corresponding to the second time point.

According to an embodiment, the memory may further include a second artificial intelligence model.

According to an embodiment, the instructions, when executed individually or collectively by the processor, may cause the head-mounted device to input the identified left-eye image corresponding to the second time point and the identified right-eye image corresponding to the second time point to the second artificial intelligence model, thereby identifying a post-processed left-eye image corresponding to the second time point and a post-processed right-eye image corresponding to the second time point.

According to an embodiment, the second artificial intelligence model may be supervised-learned by comparing a first image obtained through at least one of the first camera sensor and the second camera sensor, and a third image identified through the first artificial intelligence model.

According to an embodiment, the instructions, when executed individually or collectively by the processor, may cause the head-mounted device to alternately obtain a left-eye image corresponding to the first camera sensor and a right-eye image corresponding to the second camera sensor.

According to an embodiment, the head-mounted device may further include a display.

According to an embodiment, the instructions, when executed individually or collectively by the processor, may cause the head-mounted device to display the identified third image corresponding to the second time point through the display.

According to an embodiment, the third image may include an image of a plurality of frames.

According to an embodiment, the first time point and a third time point after the second time point may be time points at which an image is obtained from at least one of the first camera sensor, the second camera sensor, and the at least one third camera sensor.

According to an embodiment, the instructions, when executed individually or collectively by the processor, may cause the head-mounted device to identify whether a fourth image corresponding to the third time point is obtained after at least a part of the third image is displayed.

According to an embodiment, the instructions, when executed individually or collectively by the processor, may cause the head-mounted device to end the display of the third image and display the fourth image through the display, based on the fourth image being obtained.

According to an embodiment, the third image may include an image of a plurality of frames.

According to an embodiment, the instructions, when executed individually or collectively by the processor, may cause the head-mounted device to identify whether a fourth image corresponding to the third time point is obtained after at least a part of the third image is displayed.

According to an embodiment, the instructions, when executed individually or collectively by the processor, may cause the head-mounted device to obtain a fifth image corresponding to a fourth time point using the remaining part of the third image and the fourth image, based on the fourth image being obtained.

According to an embodiment, the instructions, when executed individually or collectively by the processor, may cause the head-mounted device to display the obtained fifth image through the display.

According to an embodiment, the instructions, when executed individually or collectively by the processor, may cause the head-mounted device to identify whether a fourth image corresponding to the third time point is obtained after the third image is displayed.

According to an embodiment, the instructions, when executed individually or collectively by the processor, may cause the head-mounted device to obtain updated sensing data through the acceleration sensor, based on the fourth image not being obtained.

According to an embodiment, the instructions, when executed individually or collectively by the processor, may cause the head-mounted device to input the first image, the second image corresponding to the first time point, and the updated sensing data to the first artificial intelligence model, thereby additionally generating a third image corresponding to the second time point.

An operating method of a head-mounted device according to an embodiment of the disclosure may include obtaining a first image corresponding to a first time point through at least one of a first camera sensor of the head-mounted device corresponding to a first angle of view and a second camera sensor of the head-mounted device corresponding to the first angle of view.

According to an embodiment, the operating method may include obtaining a second image corresponding to the first time point through at least one third camera sensor of the head-mounted device corresponding to a second angle of view.

According to an embodiment, the operating method may include identifying a third image corresponding to a second time point after the first time point, based on the obtained first image corresponding to the first time point, the obtained second image corresponding to the first time point, and sensing data obtained through an acceleration sensor of the head-mounted device.

According to an embodiment, the identifying of the third image may include inputting the first image corresponding to the first time point, the second image corresponding to the first time point, and the obtained sensing data to a first artificial intelligence model to identify the third image corresponding to the second time point.

According to an embodiment, the first image may include at least one of a left-eye image corresponding to the first camera sensor and a right-eye image corresponding to the second camera sensor.

According to an embodiment, the obtaining of the first image may include obtaining, through at least one of the first camera sensor and the second camera sensor, at least one of a left-eye image corresponding to the first time point and a right-eye image corresponding to the first time point.

According to an embodiment, the identifying of the third image may include inputting the obtained at least one image to the first artificial intelligence model to identify a left-eye image corresponding to the second time point and a right-eye image corresponding to the second time point.

According to an embodiment, the operating method may further include inputting the identified left-eye image corresponding to the second time point and the identified right-eye image corresponding to the second time point to a second artificial intelligence model to identify a post-processed left-eye image corresponding to the second time point and a post-processed right-eye image corresponding to the second time point.

According to an embodiment, the second artificial intelligence model may be supervised-learned by comparing a first image obtained through at least one of the first camera sensor and the second camera sensor, and a third image identified through the first artificial intelligence model.

According to an embodiment, the control method may include alternately obtaining a left-eye image corresponding to the first camera sensor and a right-eye image corresponding to the second camera sensor.

According to an embodiment, the operating method may further include displaying the identified third image corresponding to the second time point through a display of the head-mounted device.

According to an embodiment, the third image may include an image of a plurality of frames.

According to an embodiment, the operating method may include identifying whether a fourth image corresponding to the third time point is obtained after at least a part of the third image is displayed.

According to an embodiment, the first time point and a third time point after the second time point may be time points at which an image is obtained from at least one of the first camera sensor, the second camera sensor, and the at least one third camera sensor.

According to an embodiment, the operating method may include ending the display of the third image and displaying the fourth image through the display, based on the fourth image being obtained.

According to an embodiment, the third image may include an image of a plurality of frames.

According to an embodiment, the operating method may include identifying whether a fourth image corresponding to the third time point is obtained after at least a part of the third image is displayed.

According to an embodiment, the operating method may include obtaining a fifth image corresponding to a fourth time point using the remaining part of the third image and the fourth image, based on the fourth image being obtained.

According to an embodiment, the operating method may include displaying the obtained fifth image through the display.

In a non-transitory storage medium storing computer-readable instructions according to an embodiment of the disclosure, the instructions, when executed by a processor of a head-mounted device, may cause the head-mounted device to obtain a first image corresponding to a first time point through at least one of a first camera sensor of the head-mounted device corresponding to a first angle of view and a second camera sensor of the head-mounted device corresponding to the first angle of view.

According to an embodiment, the instructions, when executed individually or collectively by the processor, may cause the head-mounted device to obtain a second image corresponding to the first time point through at least one third camera sensor of the head-mounted device corresponding to a second angle of view.

According to an embodiment, the instructions, when executed individually or collectively by the processor, may cause the head-mounted device to identify a third image corresponding to a second time point after the first time point, based on the first image corresponding to the first time point, the second image corresponding to the first time point, and sensing data obtained through an acceleration sensor of the head-mounted device.

The effects obtainable from the present disclosure are not limited to the effects mentioned above, and other effects not mentioned will be clearly understood by those skilled in the art to which the present disclosure pertains from the following description.

As used herein, the term "if" will be understood to mean "when, upon," "in response to determining," or "in response to detecting," depending on the context. Similarly, "if it is determined" or "if [a stated condition or event] is detected" will optionally be understood to mean "upon determining," or "in response to determining," "upon detecting [the stated condition or event]," or "in response to detecting [the stated condition or event]."

The apparatus described above may be implemented as hardware components, software components, and/or a combination of hardware components and software components. For example, the apparatus and components described in the embodiments may be implemented using one or more general-purpose computers or special-purpose computers, such as a processor, a controller, an arithmetic logic unit (ALU), a digital signal processor, a microcomputer, a field programmable gate array (FPGA), a programmable logic unit (PLU), a microprocessor, or any other device capable of executing and responding to instructions. The processing device (or processing circuit) may perform an operating system (OS) and one or more software applications performed on the operating system. Further, the processing device may access, store, manipulate, process, and generate data in response to the execution of software. For convenience of understanding, although the processing device has been described as being used as one, those of ordinary skill in the art may know that the processing device may include a plurality of processing elements and/or a plurality of types of processing elements. For example, the processing device may include a plurality of processors or one processor and one controller. Further, other processing configurations, such as parallel processors, are also possible.

The software may include a computer program, code, an instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide instructions or data to the processing device. The software may be distributed on networked computer systems and stored or executed in a distributed manner. The software and data may be stored in one or more computer-readable recording media.

The method according to the embodiment may be implemented in the form of a program instruction that may be performed through various computer means, and recorded on a computer-readable medium. In this case, the medium may continuously store a program executable by a computer, or may temporarily store the program for execution or download. Further, the medium may be various recording means or storage means in a form in which a single or several pieces of hardware are combined, and is not limited to a medium directly connected to any computer system, but may be distributed on a network. Examples of the medium may include magnetic media such as hard disks, floppy disks, and magnetic tapes, optical recording media such as CD-ROMs and DVDs, magneto-optical media such as floptical disks, and those configured to store program instructions, including ROM, RAM, and flash memory. Further, as an example of another medium, there may be a recording medium or a storage medium managed by an app store that distributes applications or a site or server that supplies or distributes various other pieces of software.

Although the embodiments have been described with reference to the limited embodiments and drawings as described above, various modifications and variations are possible from the above description by those of ordinary skill in the art. For example, appropriate results may be achieved even if the described techniques are performed in a different order from the described method, and/or components such as the described system, structure, device, and circuit are combined or arranged in a different form from the described method, or replaced or substituted by other components or equivalents.

Therefore, other implementations, other embodiments, and equivalents to the claims are also within the scope of the following claims.

The electronic device according to various embodiments disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

The various embodiments of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in various embodiments of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

The various embodiments of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to various embodiments disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{TM}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to various embodiments, each component (e.g., a module or a program) of the aforementioned components may include a single entity or a plurality of entities, and some of the plurality of entities may be separately disposed in another component. According to various embodiments, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to various embodiments, operations performed by a module, a program, or another component may be executed sequentially, in parallel, repeatedly, or heuristically, or one or more of the operations may be executed in a different order or omitted, or one or more other operations may be added.

## Claims

1. A head-mounted device comprising:
a first camera sensor corresponding to a first angle of view;
a second camera sensor corresponding to the first angle of view;
at least one third camera sensor corresponding to a second angle of view;
an acceleration sensor;
memory storing instructions; and
a processor,
wherein the instructions, when executed individually or collectively by the processor, cause the head-mounted device to:
obtain a first image corresponding to a first time point through at least one of the first camera sensor and the second camera sensor;
obtain a second image corresponding to the first time point through the at least one third camera sensor; and
identify a third image corresponding to a second time point after the first time point, based on the first image corresponding to the first time point, the second image corresponding to the first time point, and sensing data obtained through the acceleration sensor.

2. The head-mounted device of claim 1,
wherein the memory further comprises a first artificial intelligence model,
wherein the instructions, when executed individually or collectively by the processor, cause the head-mounted device to:
input the first image corresponding to the first time point, the second image corresponding to the first time point, and the obtained sensing data to the first artificial intelligence model to identify the third image corresponding to the second time point,
wherein the first image comprises at least one of a left-eye image corresponding to the first camera sensor and a right-eye image corresponding to the second camera sensor, and
wherein the instructions, when executed individually or collectively by the processor, cause the head-mounted device to:
obtain, through at least one of the first camera sensor and the second camera sensor, at least one of a left-eye image corresponding to the first time point and a right-eye image corresponding to the first time point; and
input the obtained at least one image to the first artificial intelligence model to identify a left-eye image corresponding to the second time point and a right-eye image corresponding to the second time point.

3. The head-mounted device of claim 1 or 2,
wherein the memory further comprises a second artificial intelligence model,
wherein the instructions, when executed individually or collectively by the processor, cause the head-mounted device to:
input the identified left-eye image corresponding to the second time point and the identified right-eye image corresponding to the second time point to the second artificial intelligence model to identify a post-processed left-eye image corresponding to the second time point and a post-processed right-eye image corresponding to the second time point, and
wherein the second artificial intelligence model is supervised-learned by comparing a first image obtained through at least one of the first camera sensor and the second camera sensor, and a third image identified through the first artificial intelligence model.

4. The head-mounted device of any one of claims 1 to 3,
wherein the instructions, when executed individually or collectively by the processor, cause the head-mounted device to:
alternately obtain a left-eye image corresponding to the first camera sensor and a right-eye image corresponding to the second camera sensor.

5. The head-mounted device of any one of claims 1 to 4, further comprising a display,
wherein the instructions, when executed individually or collectively by the processor, cause the head-mounted device to:
display the identified third image corresponding to the second time point through the display.

6. The head-mounted device of any one of claims 1 to 5,
wherein the third image comprises an image of a plurality of frames,
wherein the first time point and a third time point after the second time point are
time points at which an image is obtained from at least one of the first camera sensor, the second camera sensor, and the at least one third camera sensor, and
wherein the instructions, when executed individually or collectively by the processor, cause the head-mounted device to:
identify whether a fourth image corresponding to the third time point is obtained after at least a part of the third image is displayed; and
end the display of the third image and display the fourth image through the display, based on the fourth image being obtained.

7. The head-mounted device of any one of claims 1 to 6,
wherein the third image comprises an image of a plurality of frames,
wherein the first time point and a third time point after the second time point are
time points at which an image is obtained from at least one of the first camera sensor, the second camera sensor, and the at least one third camera sensor, and
wherein the instructions, when executed individually or collectively by the processor, cause the head-mounted device to:
identify whether a fourth image corresponding to the third time point is obtained after at least a part of the third image is displayed;
obtain a fifth image corresponding to a fourth time point using a remaining part of the third image and the fourth image, based on the fourth image being obtained; and
display the obtained fifth image through the display.

8. The head-mounted device of any one of claims 1 to 7,
wherein the memory further comprises a first artificial intelligence model,
wherein the first time point and a third time point after the second time point are
time points at which an image is obtained from at least one of the first camera sensor, the second camera sensor, and the at least one third camera sensor, and
wherein the instructions, when executed individually or collectively by the processor, cause the head-mounted device to:
identify whether a fourth image corresponding to the third time point is obtained after the third image is displayed;
obtain updated sensing data through the acceleration sensor, based on the fourth image not being obtained; and
input the first image, the second image corresponding to the first time point, and the updated sensing data to the first artificial intelligence model to additionally generate a third image corresponding to the second time point.

9. An operating method of a head-mounted device, the operating method comprising:
obtaining a first image corresponding to a first time point through at least one of a first camera sensor of the head-mounted device corresponding to a first angle of view and a second camera sensor of the head-mounted device corresponding to the first angle of view;
obtaining a second image corresponding to the first time point through at least one third camera sensor of the head-mounted device corresponding to a second angle of view; and
identifying a third image corresponding to a second time point after the first time point, based on the obtained first image corresponding to the first time point, the obtained second image corresponding to the first time point, and sensing data obtained through an acceleration sensor of the head-mounted device.

10. The operating method of claim 9,
wherein the identifying of the third image comprises:
inputting the first image corresponding to the first time point, the second image corresponding to the first time point, and the obtained sensing data to a first artificial intelligence model to identify the third image corresponding to the second time point,
wherein the first image comprises at least one of a left-eye image corresponding to the first camera sensor and a right-eye image corresponding to the second camera sensor,
wherein the obtaining of the first image comprises:
obtaining, through at least one of the first camera sensor and the second camera sensor, at least one of a left-eye image corresponding to the first time point and a right-eye image corresponding to the first time point, and
wherein the identifying of the third image comprises:
inputting the obtained at least one image to the first artificial intelligence model to identify a left-eye image corresponding to the second time point and a right-eye image corresponding to the second time point.

11. The operating method of claim 9 or 10, further comprising:
inputting the identified left-eye image corresponding to the second time point and the identified right-eye image corresponding to the second time point to a second artificial intelligence model to identify a post-processed left-eye image corresponding to the second time point and a post-processed right-eye image corresponding to the second time point,
wherein the second artificial intelligence model is
supervised-learned by comparing a first image obtained through at least one of the first camera sensor and the second camera sensor, and a third image identified through the first artificial intelligence model, and
wherein the obtaining of the first image comprises:
alternately obtaining a left-eye image corresponding to the first camera sensor and a right-eye image corresponding to the second camera sensor.

12. The operating method of any one of claims 9 to 12, further comprising:
displaying the identified third image corresponding to the second time point through a display of the head-mounted device.

13. The operating method of any one of claims 9 to 12,
wherein the third image comprises an image of a plurality of frames,
wherein the first time point and a third time point after the second time point are
time points at which an image is obtained from at least one of the first camera sensor, the second camera sensor, and the at least one third camera sensor, and
wherein the operating method further comprises:
identifying whether a fourth image corresponding to the third time point is obtained after at least a part of the third image is displayed; and
ending the display of the third image and displaying the fourth image through the display, based on the fourth image being obtained.

14. The operating method of any one of claims 11 to 13,
wherein the third image comprises an image of a plurality of frames,
wherein the first time point and a third time point after the second time point are
time points at which an image is obtained from at least one of the first camera sensor, the second camera sensor, and the at least one third camera sensor, and
wherein the operating method comprises:
identifying whether a fourth image corresponding to the third time point is obtained after at least a part of the third image is displayed;
obtaining a fifth image corresponding to a fourth time point using a remaining part of the third image and the fourth image, based on the fourth image being obtained; and
displaying the obtained fifth image through the display.

15. A non-transitory storage medium storing computer-readable instructions, the instructions, when executed by a processor of a head-mounted device, causing the head-mounted device to:
obtain a first image corresponding to a first time point through at least one of a first camera sensor of the head-mounted device corresponding to a first angle of view and a second camera sensor of the head-mounted device corresponding to the first angle of view;
obtain a second image corresponding to the first time point through at least one third camera sensor of the head-mounted device corresponding to a second angle of view; and
identify a third image corresponding to a second time point after the first time point, based on the first image corresponding to the first time point, the second image corresponding to the first time point, and sensing data obtained through an acceleration sensor of the head-mounted device.
